# EUROPEAN PATENT APPLICATION

(11) **EP 4 775 464 A1**
(43) Date of publication of application: **15.07.2026**
(21) Application number: 26151031.7
(22) Date of filing: 09.01.2026
(51) Int. Cl.: B60W 10/06, B60W 10/184

(54) **COLLISION AVOIDANCE APPARATUS FOR A VEHICLE**

(30) Priority: 10.01.2025 JP 2025004311
(71) Applicant: TOYOTA JIDOSHA KABUSHIKI KAISHA, Toyota-shi, Aichi 471 8571 (JP)
(72) Inventor: ODA, Yoshikatsu, TOYOTA-SHI, AICHI, 471-8571 (JP)
(74) Representative: Cabinet Beau de Loménie

(57) **Abstract**

A collision avoidance apparatus for a vehicle comprises a driving support ECU serving as an electronic control unit configured to execute automatic braking to reduce a risk when it is determined, based on a detection result of an object detection device, that a host vehicle is at risk of colliding with an obstacle. The driving support ECU is further configured to determine whether a specific condition that an accelerator opening degree due to driving operation by a driver is equal to or greater than a reference opening degree is satisfied when the automatic braking is terminated, and when it is determined that the specific condition is satisfied, the driving support ECU controls a driving force of the host vehicle so that a vehicle speed of the host vehicle does not exceed an upper limit vehicle speed of a vehicle speed range in which the automatic braking is executed.

## Description

### BACKGROUND OF THE INVENTION

### 1. Field of the Invention

The present invention relates to a collision avoidance apparatus for a vehicle such as an automobile.

### 2. Description of the Related Art

As one type of collision avoidance apparatus for a vehicle such as an automobile, there is known a collision avoidance apparatus configured such that, when it is determined that a host vehicle is at risk of colliding with an obstacle, the risk is reduced by automatic braking, and when it is determined that the risk of collision has been eliminated, the automatic braking is terminated.

For example, Japanese Patent Application Laid-open No. 2012-61932 discloses a collision avoidance apparatus configured such that, when there is a risk of collision, the risk is reduced by automatic braking, and when it is determined that the collision has been avoided, the apparatus controls driving force of an engine so that the driving force does not increase beyond a preset restricted driving force.

According to such a collision avoidance apparatus, after a collision with an obstacle has been avoided, an increase of the driving force of the engine beyond the preset restricted driving force is prevented, and thereby rapid acceleration of a host vehicle after collision avoidance is prevented.

### Summary of the Invention

When there is a risk that a host vehicle collides with an obstacle, a driver may mistakenly continue to strongly depress an accelerator pedal instead of a brake pedal. In such a case, an accelerator opening degree increases rapidly and becomes fully open.

In a conventional collision avoidance apparatus, such as the apparatus described in the above-mentioned Japanese Patent Application Laid-open Publication, when it is determined that the collision has been avoided, driving force of the engine is controlled so as not to increase beyond a preset restricted driving force. However, if the driving force of the engine increases, a vehicle speed gradually increases, and the vehicle speed may become higher than intended by a driver.

In particular, when automatic braking for collision avoidance is executed only if a vehicle speed of a host vehicle is equal to or lower than a preset upper limit vehicle speed, even if the host vehicle again faces a risk of colliding with an obstacle, the automatic braking may not be executed because the vehicle speed exceeds the upper limit vehicle speed, and thus the collision cannot be avoided.

The present invention has been made to provide an improved collision avoidance apparatus that is capable of avoiding a collision by automatic braking even when a risk arises again that a host vehicle collides with an obstacle after termination of the automatic braking executed while a vehicle speed is equal to or lower than an upper limit vehicle speed.

According to the present invention, there is provided a collision avoidance apparatus for a vehicle, comprising: an object detection device configured to detect an object at least in front of a host vehicle; and an electronic control unit configured to, when the electronic control unit determines based on a detection result of the object detection device that the host vehicle is likely to collide with an obstacle, execute automatic braking so as to reduce the likelihood.

The electronic control unit is configured to determine, when the automatic braking is terminated, whether a specific condition is satisfied that an accelerator opening degree due to a driving operation by a driver is equal to or greater than a reference opening degree, and to control, when the electronic control unit determines that the specific condition is satisfied, a driving force of the host vehicle so that a vehicle speed of the host vehicle does not exceed an upper limit vehicle speed of a vehicle speed range in which the automatic braking is executed.

According to the above-described collision avoidance apparatus, it is determined whether the specific condition is satisfied when the automatic braking is terminated. When it is determined that the specific condition is satisfied, the driving force of the host vehicle is controlled such that the vehicle speed does not exceed the upper limit vehicle speed of the vehicle speed range in which the automatic braking is executed.

Accordingly, if the specific condition is satisfied when the automatic braking is terminated, the vehicle speed of the host vehicle does not exceed the upper limit vehicle speed. Therefore, even if, after termination of the automatic braking, the host vehicle again faces a risk of colliding with an obstacle, the automatic braking is executed when it is determined that there is a risk of collision, thereby the host vehicle is decelerated by the automatic braking and the collision with the obstacle is avoided.

In one aspect of the present invention, the electronic control unit is configured to, when the electronic control unit determines that the specific condition is not satisfied, control the driving force of the host vehicle so that a temporal increase amount of the driving force is limited.

According to this aspect, when it is determined that the specific condition is not satisfied, the driving force of the host vehicle is controlled so that a temporal increase amount of the driving force is limited. Accordingly, in a situation where the driver is not strongly depressing the accelerator pedal by mistake instead of the brake pedal, a rate of increase of the driving force after termination of the automatic braking is limited, and thereby a rapid increase in vehicle speed is prevented.

In another aspect of the present invention, the electronic control unit is configured to limit a temporal increase amount of the driving force such that the driving force of the host vehicle becomes smaller than a driving force calculated based on the accelerator opening degree when a vehicle speed of the host vehicle is less than a reference vehicle speed lower than the upper limit vehicle speed, set the temporal increase amount of the driving force to zero when the vehicle speed of the host vehicle is equal to the reference vehicle speed, and set the temporal increase amount of the driving force to a negative value when the vehicle speed of the host vehicle exceeds the reference vehicle speed, thereby controlling the driving force such that the vehicle speed of the host vehicle does not exceed the upper limit vehicle speed.

According to this aspect, when the vehicle speed of the host vehicle is less than the reference vehicle speed lower than the upper limit vehicle speed, the temporal increase amount of the driving force is limited so that the driving force of the host vehicle becomes smaller than the driving force calculated based on the accelerator opening degree. When the vehicle speed of the vehicle is equal to the reference vehicle speed, the temporal increase amount of the driving force is set to zero, and when the vehicle speed exceeds the reference vehicle speed, the temporal increase amount of the driving force is set to a negative value.

Accordingly, the temporal increase amount of the driving force can be controlled in accordance with a relationship between the vehicle speed of the host vehicle and the reference vehicle speed which is lower than the upper limit vehicle speed. Therefore, it is possible to reliably prevent the vehicle speed of the host vehicle from exceeding the upper limit vehicle speed.

In another aspect of the present invention, the electronic control unit is configured to terminate the automatic braking when a state in which the host vehicle is stopped has continued for a termination reference time or longer.

According to this aspect, the automatic braking is terminated when a state in which the host vehicle is stopped has continued for the termination reference time or longer. Accordingly, compared to where the automatic braking is terminated when it is determined that the host vehicle is stopped without determining a continuation time of the stopped state, it is possible to terminate the automatic braking at a stage where it is reliably determined that there is no longer a risk that the host vehicle collides with an obstacle.

In another aspect of the present invention, the electronic control unit is configured to determine that the specific condition is satisfied when a situation in which the accelerator opening degree is equal to or greater than the reference opening degree has continued for a reference continuation time or longer.

According to this aspect, when a situation in which the accelerator opening degree is equal to or greater than the reference opening degree has continued for the reference continuation time or longer, it is determined that the specific condition is satisfied. Accordingly, compared to where it is determined that the specific condition is satisfied without determining a continuation time of the state in which the accelerator opening degree is equal to or greater than the reference opening degree, it is possible to accurately determine the state in which the accelerator opening degree is equal to or greater than the reference opening degree.

Other objects, features, and advantages of the present invention will become apparent from the following description of embodiments of the invention with reference to the accompanying drawings.

### BRIEF DESCRIPTION OF THE DRAWINGS

Fig. 1 is a schematic configuration diagram showing an embodiment of a collision avoidance apparatus for a vehicle according to the present invention.
Fig. 2 is a flowchart corresponding to a collision avoidance control program in the embodiment.
Fig. 3 is a graph corresponding to a map for calculating a restricted additional driving force ΔFdl based on a vehicle speed V in a situation where an accelerator opening degree A is equal to or greater than a reference opening degree Ac.
Fig. 4 is a graph corresponding to a map for calculating a restricted additional driving force ΔFdl based on a vehicle speed V in a situation where the accelerator opening degree A is less than the reference opening degree Ac.
Fig. 5 is a time chart showing an example of operation of the embodiment in a situation where the accelerator opening degree A is equal to or greater than the reference opening degree Ac.
Fig. 6 is a time chart showing an example of operation of the embodiment in a situation where the accelerator opening degree A is less than the reference opening degree Ac.

### DETAILED DESCRIPTION

With reference to the accompanying drawings, an embodiment of the collision avoidance apparatus according to the present invention will be described in detail.

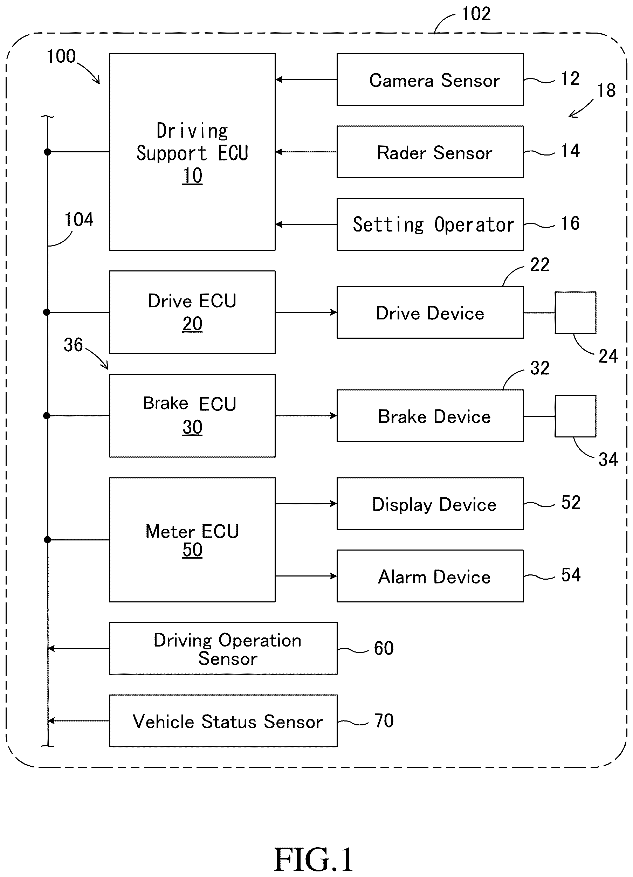

As shown in Fig. 1, a travel control apparatus 100 according to the embodiment of the present invention is applied to a vehicle 102 and comprises a driving support ECU 10. The vehicle 102 is a vehicle capable of autonomous driving and comprises a drive ECU 20, a brake ECU 30, and a meter ECU 50. The term "ECU" refers to an electronic control unit comprising a microcomputer as a main component. The vehicle 102 may be referred to as a host vehicle 102, as necessary, in order to distinguish it from other vehicles.

The microcomputer of each ECU comprises a CPU, ROM, RAM, a rewritable nonvolatile memory (N/M), and an interface (I/F). The CPU executes instructions (programs, routines) stored in the ROM so as to realize various functions. Furthermore, these ECUs are connected to each other via a CAN (Controller Area Network) 104 so as to be capable of exchanging data (communicating). Accordingly, detected values of sensors (including switches) connected to a specific ECU are also transmitted to other ECUs.

The driving support ECU 10 serves as a central control unit for performing driving assistance controls, including collision avoidance control, following distance control, and lane keeping control. In the embodiment, the driving support ECU 10 executes travel control for the vehicle 102 in cooperation with other ECUs, as described in detail below. In the collision avoidance control of the embodiment, when the driving support ECU 10 determines that there is a possibility of a collision between an obstacle existing ahead in a traveling direction of the host vehicle and the host vehicle, the driving support ECU 10 issues a warning to alert of such possibility. The obstacle is an object, such as a stopped vehicle, a preceding vehicle traveling at a low speed, or a crossing pedestrian, which would cause damage to the host vehicle and/or the other party in the event of a collision.

Furthermore, when the driving support ECU 10 determines that the possibility of collision between the obstacle and the host vehicle increases and there is a risk of collision, the ECU executes automatic braking to reduce such risk. The automatic braking is executed when a vehicle speed V of the host vehicle is equal to or less than an upper limit vehicle speed Vu. Thus, the upper limit vehicle speed Vu defines the maximum vehicle speed at which the automatic braking is executed.

The driving support ECU 10 is connected to a camera sensor 12, a radar sensor 14, and a setting operator 16. The camera sensor 12 and the radar sensor 14 respectively comprise a plurality of camera devices and a plurality of radar devices. The camera sensor 12 and the radar sensor 14 function as an object information acquisition device 18 configured to acquire object information at least in front of the vehicle 102.

Each camera device of the camera sensor 12 comprises, although not shown, a camera unit configured to capture an image of surroundings of the vehicle 102, and a recognition unit configured to analyze the image data obtained by the camera unit and recognize targets such as road white lines or other vehicles. The recognition unit supplies information relating to the recognized targets to the driving support ECU 10 at predetermined intervals.

Each radar device of the radar sensor 14 comprises a radar transmitting/receiving unit and a signal processing unit (not shown). The radar transmitting/receiving unit radiates a radio wave in a millimeter-wave band (hereinafter referred to as "millimeter wave"), and receives a millimeter wave (i.e., reflected wave) reflected by a three-dimensional object (for example, another vehicle, a bicycle, etc.) existing within a radiation range. The signal processing unit supplies to the driving support ECU 10, at predetermined intervals, information representing a distance between the host vehicle and the three-dimensional object, a relative speed between the host vehicle and the three-dimensional object, and a relative position (direction) of the three-dimensional object relative to the host vehicle, based on a phase difference between the transmitted millimeter wave and the received reflected wave, an attenuation level of the reflected wave, and a time from transmission of the millimeter wave to reception of the reflected wave. LiDAR (Light Detection and Ranging) may be used instead of, or in addition to, the radar sensor 14.

The setting operator 16 is provided at a position operable by a driver, such as a steering wheel (not shown in Fig. 1), and is operated by the driver. Although not shown in Fig. 1, the setting operator 16 comprises a collision avoidance switch. The driving support ECU 10 executes the collision avoidance control when the collision avoidance switch is on, as described in detail below.

A drive device 22 configured to accelerate the vehicle 102 by imparting driving force to driving wheels 24 is connected to the drive ECU 20. The drive ECU 20 normally controls the drive device 22 such that the driving force generated by the drive device 22 changes in accordance with a driving operation by the driver. When a command signal is received from the driving support ECU 10, the drive ECU 20 controls the drive device 22 based on the command signal.

A brake device 32 configured to decelerate the vehicle 102 by imparting braking force to wheels 34 is connected to the brake ECU 30. The brake ECU 30 normally controls the brake device 32 such that the braking force generated by the brake device 32 changes in accordance with a braking operation by the driver. When a command signal is received from the driving support ECU 10, the brake ECU 30 controls the brake device 32 based on the command signal to perform automatic braking. As described above, the automatic braking for avoiding a collision with an obstacle is executed when the vehicle speed V of the host vehicle is equal to or less than the upper limit vehicle speed Vu.

Accordingly, the brake ECU 30 and the brake device 32 cooperate with each other to function as an automatic brake device 36. When braking force is applied to the wheels by the automatic braking or the like, brake lamps (not shown in Fig. 1) are lit.

A touch-panel type display device 52 configured to display a status of control by the driving support ECU 10 and an alarm device 54 configured to issue a warning are connected to the meter ECU 50. The display device 52 may be, for example, a multi-information display on which meters and various information are displayed, or may be a display of a navigation device. As described later, when the display device 52 receives a signal from the driving support ECU 10, the display device 52 displays the status of the collision avoidance control.

The alarm device 54 is activated when it is determined that the vehicle 102 may collide with an obstacle, and issues a warning indicating that the vehicle 102 may collide with the obstacle. The alarm device 54 is also activated when it is determined that there is a risk that the vehicle 102 collides with the obstacle, and issues a warning indicating such risk. The alarm device 54 may be any of a visual alarm device such as an alarm lamp, an auditory alarm device such as an alarm buzzer, or a sensory alarm device such as seat vibration, or any combination thereof. The degree of alert of the warning indicating the risk that the vehicle 102 collides with the obstacle is higher than that of the warning indicating the possibility that the vehicle 102 may collide with the obstacle.

A driving operation sensor 60 and a vehicle state sensor 70 are also connected to the CAN 104. Information detected by the driving operation sensor 60 and the vehicle state sensor 70 (hereinafter referred to as sensor information) is transmitted to the CAN 104. The sensor information transmitted to the CAN 104 is available for use in each ECU as appropriate. The sensor information may be information of a sensor connected to a specific ECU and transmitted from the specific ECU to the CAN 104.

The driving operation sensor 60 comprises an accelerator opening sensor configured to detect an accelerator opening degree A (0-100%) as an amount of accelerator pedal operation, a braking operation amount sensor configured to detect a master cylinder pressure or a pedal force Fbp applied to a brake pedal, and a brake switch configured to detect whether or not the brake pedal is operated. The driving operation sensor 60 further comprises a steering angle sensor configured to detect a steering angle, and a steering torque sensor configured to detect a steering torque.

The vehicle state sensor 70 comprises a vehicle speed sensor configured to detect a vehicle speed V of the vehicle 102, a longitudinal acceleration sensor configured to detect a longitudinal acceleration Gx of the vehicle, a lateral acceleration sensor configured to detect a lateral acceleration of the vehicle, and a yaw rate sensor configured to detect a yaw rate of the vehicle.

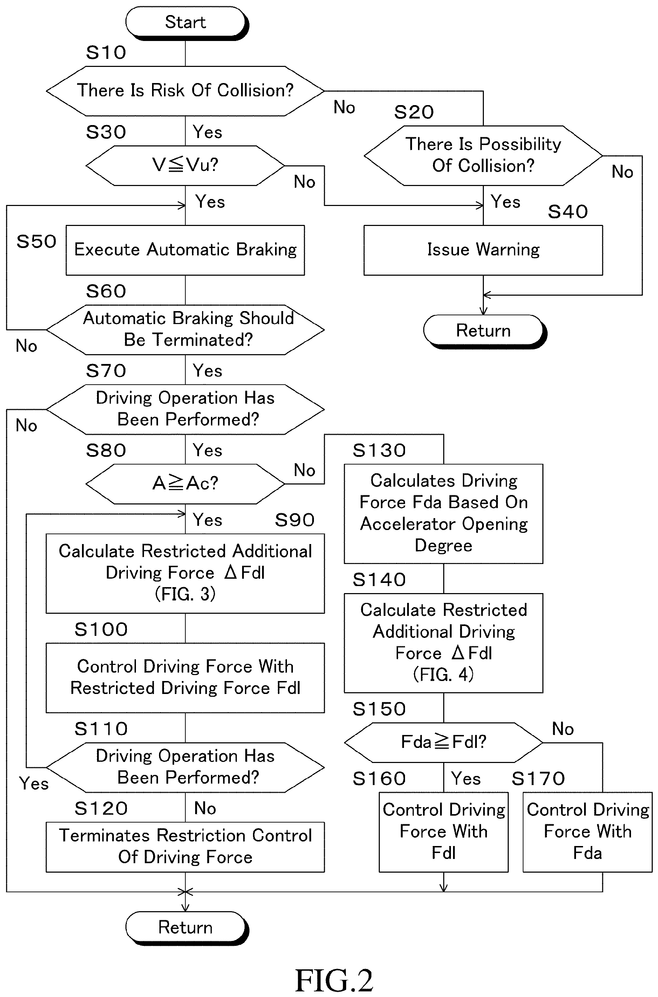

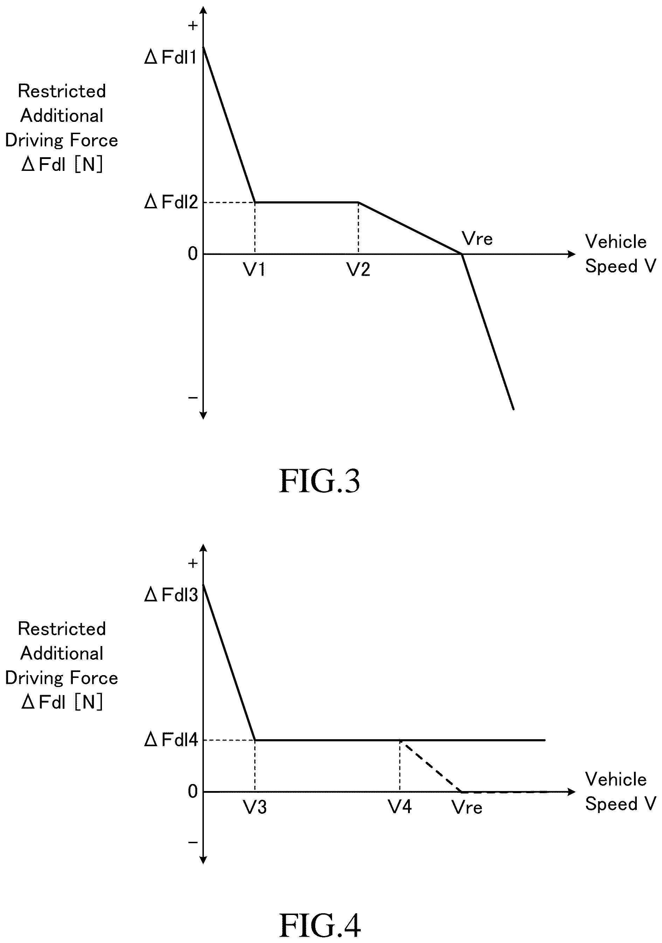

In the embodiment, the ROM of the driving support ECU 10 stores a collision avoidance control program corresponding to the flowchart shown in Fig. 2. Furthermore, in the embodiment, the ROM of the driving support ECU 10 stores maps corresponding to the graphs shown in Figs. 3 and 4.

### <Collision Avoidance Control>

Next, the collision avoidance control routine according to the embodiment will be described with reference to the flowchart shown in Fig. 2. The control according to the flowchart shown in Fig. 2 is repeatedly executed at predetermined intervals by the CPU of the driving support ECU 10 under a condition where the collision avoidance support switch is turned on.

First, in step S10, the CPU acquires information of a relative distance Lr between the host vehicle and an obstacle and a relative speed Vr of the host vehicle relative to the obstacle, detected for example by the camera sensor 12 or the radar sensor 14. Further, based on the relative distance Lr and the relative speed Vr, the CPU determines whether there is a risk that the host vehicle collides with the obstacle. When the determination is affirmative, the routine proceeds to step S30. When the determination is negative, the routine proceeds to step S20.

It is noted that a collision prediction time TTC, which is a predicted time until the host vehicle collides with the obstacle, is calculated as a value obtained by dividing the relative distance Lr by the relative speed Vr. When the TTC is equal to or less than a first reference value TTC1 (a positive constant), it is determined that there is a risk that the host vehicle collides with the obstacle. The collision prediction time TTC is an index indicating a likelihood that the host vehicle collides with the obstacle, and the smaller the value is, the higher the risk of collision with the obstacle.

In step S20, the CPU determines, based on the relative distance Lr and the relative speed Vr, whether there is a possibility that the host vehicle collides with the obstacle. When the determination is negative, the routine ends. When the determination is affirmative, the routine proceeds to step S40. It is noted that when the TTC is equal to or less than a second reference value TTC2 (a positive constant larger than the first reference value TTC1), it is determined that there is a possibility that the host vehicle collides with the obstacle.

In step S30, the CPU determines whether a vehicle speed V detected by the vehicle speed sensor is equal to or less than the upper limit vehicle speed Vu (for example, a positive constant of 15 km/h). When the determination is affirmative, the routine proceeds to step S50. When the determination is negative, the routine proceeds to step S40.

In step S40, the CPU outputs a command signal to the meter ECU 50 to cause the display device 52 to display a warning indicating that the host vehicle may collide with the obstacle, and activates the alarm device 54 to issue a warning indicating that the host vehicle may collide with the obstacle.

When the determination in step S30 is negative and step S40 is executed, the display device 52 displays a warning indicating that the host vehicle is at risk of colliding with the obstacle, and the alarm device 54 is activated to issue a warning indicating that the host vehicle is at risk of colliding with the obstacle. The degree of alert of the warning issued when the determination in step S30 is negative and step S40 is executed is higher than that of the warning issued when the determination in step S20 is affirmative and step S40 is executed.

In step S50, the CPU calculates a target deceleration Gbt of the host vehicle to prevent the host vehicle from colliding with the obstacle, based on the relative distance Lr and the relative speed Vr. Further, the CPU outputs a command signal to the brake ECU 30 to decelerate the vehicle at the target deceleration Gbt, thereby executing the automatic braking by the automatic brake device 36 so that the deceleration of the vehicle becomes the target deceleration Gbt.

In step S60, the CPU determines whether the automatic braking for preventing the host vehicle from colliding with the obstacle should be terminated. When the determination is negative, the routine returns to step S50. When the determination is affirmative, the routine proceeds to step S70. It may be determined that the automatic braking should be terminated when it is determined that a state in which the host vehicle is stopped has continued for a termination reference time te (a positive constant) or more, or when it is determined that there is no possibility that the host vehicle collides with the obstacle.

In step S70, the CPU determines whether a driving operation has been performed by the driver while the host vehicle is in a stopped state. When the determination is negative, the routine ends. When the determination is affirmative, the routine proceeds to step S80. It may be determined that a driving operation has been performed by the driver when the accelerator opening degree A is not zero but a positive value.

In step S80, the CPU determines whether a situation in which the accelerator opening degree A is equal to or greater than a reference opening degree Ac (100% or a positive constant close to 100%) has continued for a reference continuation time tc (a positive constant) before and after the host vehicle stops. When the determination is negative, the routine proceeds to step S130. When the determination is affirmative, the routine proceeds to step S90. It is to be noted that the determination is affirmative when the accelerator opening degree A has been equal to or greater than the reference opening degree Ac until the host vehicle stops, and the continuation time thereof is equal to or greater than the reference continuation time tc, or when the accelerator opening degree A has been equal to or greater than the reference opening degree Ac from the time the host vehicle has stopped and the continuation time thereof is equal to or greater than the reference continuation time tc.

As understood from the above description, steps S60 to S80 are steps of determining whether a specific condition that the accelerator opening degree A due to the driving operation by the driver is equal to or greater than the reference opening degree Ac when the automatic braking is terminated has been satisfied.

In step S90, the CPU calculates a restricted additional driving force ΔFdl from a map corresponding to the graph shown in Fig. 3 based on the vehicle speed V. As shown in Fig. 3, the restricted additional driving force ΔFdl decreases from ΔFdl1 (a positive constant) to ΔFdl2 (a positive constant smaller than ΔFdl1) as the vehicle speed V increases, when the vehicle speed is equal to or greater than 0 and less than V1 (a positive constant). The restricted additional driving force ΔFdl is ΔFdl2 regardless of the vehicle speed V when the vehicle speed is equal to or greater than V1 and less than V2 (a positive constant larger than V1). The restricted additional driving force ΔFdl decreases from ΔFdl2 to 0 as the vehicle speed V increases when the vehicle speed is equal to or greater than V2 and equal to or less than a reference vehicle speed Vre (a positive constant larger than V2 and smaller than the upper limit vehicle speed Vu). Furthermore, the restricted additional driving force ΔFdl decreases from 0 (negative value with increasing absolute value) as the vehicle speed V increases when the vehicle speed is equal to or greater than the reference vehicle speed Vre.

In step S100, the CPU calculates a restricted driving force Fdl as a sum of a previous driving force value Fdf and the restricted additional driving force ΔFdl. Further, the CPU outputs a command signal to the drive ECU 20 to control the driving force Fd of the host vehicle such that the driving force becomes the restricted driving force Fdl.

In step S110, the CPU determines, similarly to step S70, whether a driving operation has been performed by the driver. When the determination is affirmative, the routine returns to step S90. When the determination is negative, the routine proceeds to step S120.

In step S120, the CPU terminates the restriction control of the driving force, namely the control of restricting the driving force Fd of the host vehicle to the restricted driving force Fdl.

In step S130, the CPU calculates a driving force Fda based on the accelerator opening degree A in a known manner in the art. The driving force Fda increases as the accelerator opening degree A increases.

In step S140, the CPU calculates a restricted additional driving force ΔFdl from a map corresponding to the graph shown in Fig. 4 (solid line) based on the vehicle speed V. As shown in Fig. 4, the restricted additional driving force ΔFdl decreases from ΔFdl3 (a positive constant) to ΔFdl4 (a positive constant smaller than ΔFdl3) as the vehicle speed V increases, when the vehicle speed is equal to or greater than 0 and less than V3 (a positive constant). The restricted additional driving force ΔFdl is ΔFdl4 regardless of the vehicle speed V when the vehicle speed is equal to or greater than V3. It is noted that ΔFdl3 and ΔFdl4 may be the same as ΔFdl1 and ΔFdl2, respectively, and V3 may be the same as V1.

In step S150, the CPU calculates a restricted driving force Fdl as a sum of a previous driving force value Fdf and the restricted additional driving force ΔFdl. Further, the CPU determines whether the driving force Fda calculated in Step S130 based on the accelerator opening degree A is equal to or greater than the restricted additional driving force ΔFdl. When the determination is negative, the routine proceeds to step S170. When the determination is affirmative, the routine proceeds to step S160.

In step S160, the CPU outputs a command signal to the drive ECU 20 to control the driving force Fd of the host vehicle such that the driving force becomes the restricted driving force Fdl. In contrast, in step S170, the CPU outputs a command signal to the drive ECU 20 to control the driving force Fd of the host vehicle such that the driving force becomes the driving force Fda calculated based on the accelerator opening degree A.

### <Example of Operation of the Embodiment>

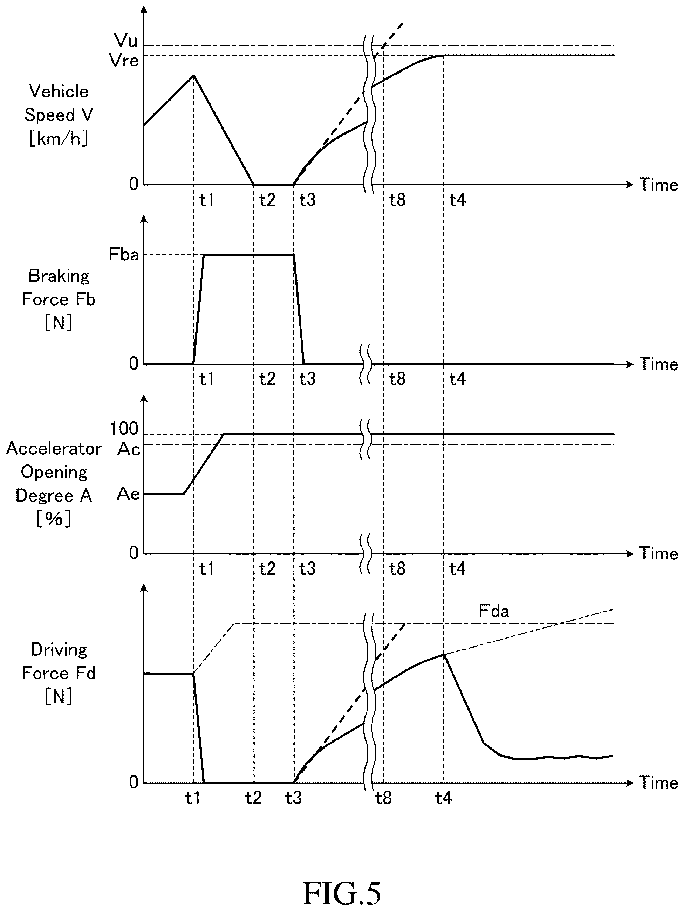

### 1. Case where the determination in step S80 is affirmative (Fig. 5)

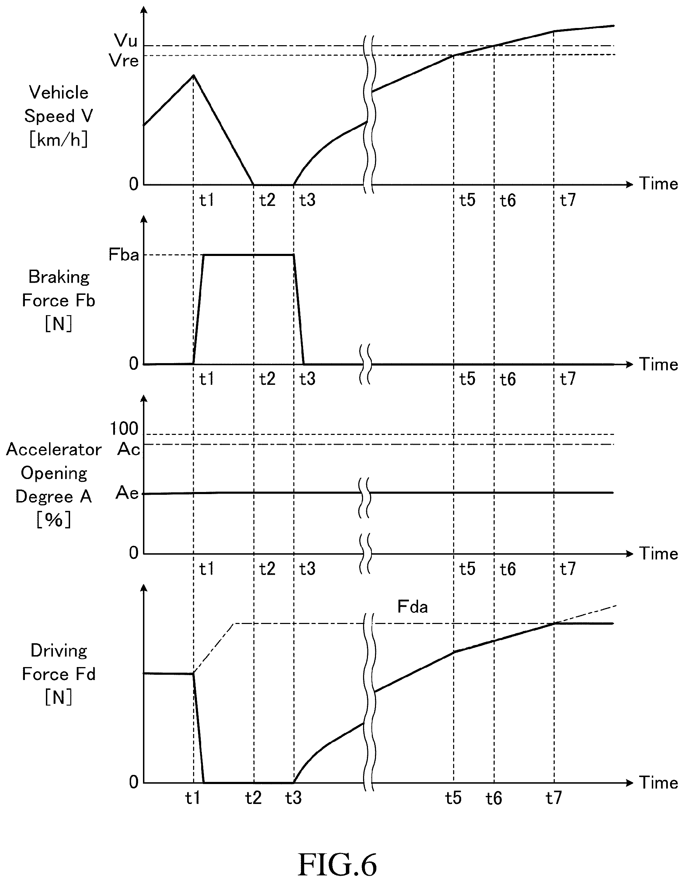

As shown in Fig. 5, at time t1, the determinations in steps S10 and S30 become affirmative and the automatic braking is started; at time t2, the vehicle speed V becomes 0; and at time t3, the automatic braking is terminated. A braking force Fb due to the automatic braking rapidly increases at time t1, becomes Fba from immediately after time t1 until time t3, becomes 0 immediately after time t3, and remains 0 thereafter. A driving force Fd of the vehicle 102 starts to rapidly decrease at time t1 and becomes 0 from immediately after time t1 until time t3. The above-described changes of the vehicle speed V, the braking force Fb, and the driving force Fd are the same in Fig. 6 described later.

It is assumed that immediately before time t1 the driver mistakenly depresses the accelerator pedal instead of the brake pedal and rapidly depresses the accelerator pedal, so that the accelerator opening degree A becomes 100% before time t2 and remains at 100% thereafter.

At time t3, the determinations in steps S60 and S70 become affirmative, the determination in step S80 becomes affirmative, and steps S90 to S110 are repeatedly executed. Accordingly, an increase of the driving force Fd of the vehicle 102 is limited by the restricted additional driving force ΔFdl calculated from the map corresponding to the graph shown in Fig. 3. The vehicle speed V gradually increases after time t3.

When, at time t4, the vehicle speed V reaches the reference vehicle speed Vre, the restricted additional driving force ΔFdl becomes 0. Immediately after time t4, the restricted additional driving force ΔFdl becomes a negative value and the driving force Fd decreases. Thereafter, when the vehicle speed V fluctuates above and below the reference vehicle speed Vre, the restricted additional driving force ΔFdl fluctuates between negative and positive values, whereby the vehicle speed V is substantially maintained at the reference vehicle speed Vre.

Accordingly, the vehicle speed V does not exceed the upper limit vehicle speed Vu, which is higher than the reference vehicle speed Vre. Therefore, even if an obstacle exists again ahead of the vehicle 102 and the determination in step S10 becomes affirmative, it is possible to prevent the determination in step S30 from becoming negative and to prevent the automatic braking of step S50 from not being executed.

### 2. Case where the determination in step S80 is negative (Fig. 6)

As shown in Fig. 6, the accelerator pedal is not rapidly depressed, and the accelerator opening degree A is constant at Ae%. After time t3, the determinations in steps S60 and S70 become affirmative, but the determination in step S80 becomes negative. Therefore, steps S130 to S170 are executed, and an increase of the driving force Fd of the vehicle 102 is limited by the restricted additional driving force ΔFdl calculated from the map corresponding to the graph shown in Fig. 4.

The driving force Fd and the vehicle speed V of the vehicle 102 gradually increase after time t3. It is assumed that the vehicle speed V becomes greater than the reference vehicle speed Vre after time t5 and becomes greater than the upper limit vehicle speed Vu after time t6. It is further assumed that restricted driving force Fdl, which is a sum of a previous driving force value Fdf and the restricted additional driving force ΔFdl, becomes greater than a driving force Fda calculated based on the accelerator opening degree A after time t7. The driving force Fd of the vehicle 102 is controlled to become the restricted driving force Fdl from time t3 until before time t7, and is controlled to become the driving force Fda calculated based on the accelerator opening degree A after time t7.

Accordingly, even when the accelerator opening degree A is large, as long as it is smaller than the reference opening degree Ac, increases of the driving force Fd and the vehicle speed V of the vehicle 102 are suppressed, and rapid increases thereof are prevented. Therefore, compared to where the increase of the driving force Fd is not suppressed, it is possible to delay time t6 at which the vehicle speed V becomes greater than the upper limit vehicle speed Vu, and thereby delay a time at which the determination in step S30 becomes negative. Thus, it is possible to delay a time at which the automatic braking for collision avoidance is no longer executed because the vehicle speed V has exceeded the upper limit vehicle speed Vu. It is also possible to prevent the driving force Fd from becoming greater than the driving force Fda calculated based on the accelerator opening degree A.

In Fig. 6, the accelerator opening degree A is constant; however, even when the accelerator opening degree A varies within a range smaller than the reference opening degree Ac, the determination in step S30 becomes negative. Therefore, except that the vehicle speed V, the braking force Fb, and the driving force Fd vary in accordance with variation of the accelerator opening degree A, they change similarly to those shown in Fig. 6.

### <Example of Conventional Collision Avoidance Control>

An operation of a conventional collision avoidance apparatus, such as the apparatus described in the above-mentioned Japanese Patent Application Laid-open Publication, will be described for a case where, for example, a driver continues to strongly depress the accelerator pedal by mistake instead of the brake pedal.

In the conventional collision avoidance apparatus, when the determination in step S60 becomes affirmative, control similar to that from step S130 onward is performed without performing steps S70 and S80. Accordingly, as indicated by the broken line in Fig. 5, the driving force Fd of the vehicle 102 rapidly increases after time t3 and soon becomes the driving force Fda calculated based on the accelerator opening degree A. As a result, the vehicle speed V rapidly increases after time t3, and at, for example, time t8 and thereafter-which occurs earlier than time t4 in Fig. 5 and times t5 and t6 in Fig. 6-the vehicle speed V becomes higher than the upper limit vehicle speed Vu. Therefore, if an obstacle exists again ahead of the vehicle 102 and the determination in step S10 becomes affirmative, the determination in step S30 becomes negative, so that the automatic braking of step S50 is not executed. Thus, a collision with the obstacle cannot be avoided by the automatic braking.

As understood from the above description, according to the embodiment, it is determined whether a specific condition is satisfied in which the accelerator opening degree A due to the driving operation by the driver is equal to or greater than the reference opening degree Ac when the automatic braking is terminated (S60 to S80). When it is determined that the specific condition is satisfied, the driving force Fd of the host vehicle is controlled so that the vehicle speed V of the host vehicle does not exceed the upper limit vehicle speed Vu, which is an upper limit of the vehicle speed range in which the automatic braking is executed (S90 to S120).

Accordingly, if the specific condition is satisfied when the automatic braking is terminated, the vehicle speed V of the host vehicle does not exceed the upper limit vehicle speed Vu. Therefore, even if there again arises a risk that the host vehicle collides with an obstacle after termination of the automatic braking, the automatic braking is executed when it is determined that there is a risk that the host vehicle collides with the obstacle, thereby the host vehicle is decelerated by the automatic braking and the collision with the obstacle is avoided.

Further, according to the embodiment, when it is determined that the specific condition is not satisfied, the driving force Fd of the host vehicle is controlled so that a temporal increase amount ΔFdl of the driving force is limited (S80, S130 to S170). Therefore, in a situation where the driver is not strongly depressing the accelerator pedal by mistake instead of the brake pedal, a rate of increase of the driving force after termination of the automatic braking is limited, and thereby a rapid increase in vehicle speed is prevented.

Further, according to the embodiment, when the vehicle speed V of the host vehicle is less than the reference vehicle speed Vre, which is lower than the upper limit vehicle speed Vu, the temporal increase amount ΔFdl of the driving force is limited so that the driving force Fd of the host vehicle becomes smaller than the driving force Fda calculated based on the accelerator opening degree. When the vehicle speed of the vehicle is the reference vehicle speed, the temporal increase amount of the driving force is set to 0, and when the vehicle speed exceeds the reference vehicle speed, the temporal increase amount of the driving force is set to a negative value.

Accordingly, the temporal increase amount ΔFdl of the driving force can be controlled in accordance with a relationship between the vehicle speed V of the host vehicle and the reference vehicle speed Vre which is lower than the upper limit vehicle speed Vu. Therefore, it is possible to reliably prevent the vehicle speed V of the host vehicle from exceeding the upper limit vehicle speed Vu.

Further, according to the embodiment, the automatic braking is terminated when a state in which the host vehicle is stopped has continued for the termination reference time te or more. Therefore, compared to where the automatic braking is terminated when it is determined that the host vehicle is stopped without determining a continuation time of the stopped state, it is possible to terminate the automatic braking at a stage where there is reliably no longer a risk that the host vehicle collides with an obstacle.

Further, according to the embodiment, it is determined that the specific condition is satisfied when a situation in which the accelerator opening degree A is equal to or greater than the reference opening degree Ac has continued for the reference continuation time tc or more. Therefore, compared to where it is determined that the specific condition is satisfied without determining the continuation time of the state in which the accelerator opening degree is equal to or greater than the reference opening degree, it is possible to accurately determine the state in which the accelerator opening degree is equal to or greater than the reference opening degree.

Although the present invention has been described in detail with reference to a specific embodiment, it will be apparent to those skilled in the art that the present invention is not limited to the above-described embodiment, and various other embodiments are possible within the scope of the present invention.

For example, in the embodiment described above, the restricted additional driving force ΔFdl calculated from the map corresponding to the graph indicated by the solid line in Fig. 4 is a constant value ΔFdl4 regardless of the vehicle speed when the vehicle speed V is equal to or greater than V3. As indicated by the broken line in Fig. 4, the restricted additional driving force ΔFdl may decrease from ΔFdl4 to 0 as the vehicle speed increases when the vehicle speed V is equal to or greater than V4, which is greater than V3 and lower than the reference vehicle speed Vre, and less than the reference vehicle speed Vre, and may be 0 when the vehicle speed V is equal to or greater than the reference vehicle speed Vre.

According to this modification, when the vehicle speed V is equal to or greater than V4 and less than the reference vehicle speed Vre, a rate of increase of the driving force decreases as the vehicle speed increases, and when the vehicle speed V is equal to or greater than the reference vehicle speed Vre, the driving force does not increase even if the vehicle speed increases. Therefore, time t7 at which the restricted driving force Fdl, which is the sum of the previous driving force value Fdf and the restricted additional driving force ΔFdl, becomes greater than the driving force Fda calculated based on the accelerator opening degree A can be made later than in the embodiment.

Further, in the above embodiment, when the determination in step S80 is negative, that is, when it is determined that the specific condition is not satisfied, steps S130 to S170 are executed. However, the limitation of the increase of the driving force Fd of the vehicle 102 when the determination in step S80 is negative may be performed in a manner other than steps S130 to S170.

Furthermore, in the above embodiment, when the automatic braking is executed, the driving force Fd of the vehicle 102 is reduced to 0. However, the driving force Fd may be reduced to a value greater than 0, or the driving force may not be reduced.

## Claims

1. A collision avoidance apparatus (100) for a vehicle, comprising: an object detection device (18) configured to detect an object at least in front of a host vehicle (102); and an electronic control unit (10) configured to, when the electronic control unit (10) determines based on a detection result of the object detection device (18), that the host vehicle (102) is likely to collide with an obstacle, execute automatic braking so as to reduce the likelihood, **characterized in that**
the electronic control unit (10) is configured to determine, when the automatic braking is terminated, whether a specific condition is satisfied that an accelerator opening degree (A) due to a driving operation by a driver is equal to or greater than a reference opening degree (Ac), and to control, when the electronic control unit (10) determines that the specific condition is satisfied, a driving force of the host vehicle (102) so that a vehicle speed (V) of the host vehicle (102) does not exceed an upper limit vehicle speed (Vu) of a vehicle speed range in which the automatic braking is executed.

2. The collision avoidance apparatus (100) according to claim 1, wherein the electronic control unit (10) is configured to, when the electronic control unit (10) determines that the specific condition is not satisfied, control the driving force of the host vehicle (102) so that a temporal increase amount (ΔFdl) of the driving force is limited.

3. The collision avoidance apparatus (100) according to claims 1 or 2, wherein the electronic control unit (10) is configured to limit a temporal increase amount (ΔFdl) of the driving force such that the driving force of the host vehicle (102) becomes smaller than a driving force (Fda) calculated based on the accelerator opening degree (A) when a vehicle speed (V) of the host vehicle (102) is less than a reference vehicle speed (Vre) lower than the upper limit vehicle speed (Vu), set the temporal increase amount (ΔFdl) of the driving force to zero when the vehicle speed (V) of the host vehicle (102) is equal to the reference vehicle speed (Vre), and set the temporal increase amount (ΔFdl) of the driving force to a negative value when the vehicle speed (V) of the host vehicle (102) exceeds the reference vehicle speed (Vre), thereby controlling the driving force such that the vehicle speed of the host vehicle (102) does not exceed the upper limit vehicle speed.

4. The collision avoidance apparatus (100)according to any one of claims 1 to 3, wherein the electronic control unit (10) is configured to terminate the automatic braking when a state in which the host vehicle (102) is stopped has continued for a termination reference time or longer.

5. The collision avoidance apparatus (100) according to any one of claims 1 to 4, wherein the electronic control unit (10) is configured to determine that the specific condition is satisfied when a situation in which the accelerator opening degree (A) is equal to or greater than the reference opening degree (Ac) has continued for a reference continuation time or longer.
